# EUROPÄISCHE PATENTSCHRIFT

(11) **EP 1 704 952 B1**
(45) Veröffentlichungstag und Bekanntmachung des Hinweises auf die Patenterteilung: **24.09.2008**
(21) Anmeldenummer: 06006144.7
(22) Anmeldetag: 24.03.2006
(51) Int. Cl.: B23D 35/00

(54) **Betriebsverfahren für Längsteilanlagen und Längsteilanlage**
Method of operating a slitting apparatus and slitting apparatus
Procédé de mise en opération d'un dispositif de refendage et dispositif de refendage

(30) Priorität: 24.03.2005 DE 202005005014 U; 24.03.2005 DE 202005005012 U
(43) Veröffentlichungstag der Anmeldung: 27.09.2006
(73) Patentinhaber: Josef Fröhling GmbH & Co. KG, 58540 Meinerzhagen (DE)
(72) Erfinder: Nüs,Wolfgang, 57223 Kreuztal (DE); Rieckmann, Dr. Jens, 57462 Olpe (DE); Warmuth, Dr. Peter, 57462 Olpe (DE); Schröder, Jörg, 47441 Moers-Asberg (DE)
(74) Vertreter: Lindner, Manfred Klaus

(56) Entgegenhaltungen:
- WO-A-96/03245
- FR-A- 2 651 456
- GB-A- 2 405 117
- US-A- 4 667 550
- US-A- 4 922 779
- US-B1- 6 314 388
- PATENT ABSTRACTS OF JAPAN Bd. 008, Nr. 080 (M-289), 12. April 1984 (1984-04-12) & JP 58 223514 A (ISHIKAWAJIMA HARIMA JUKOGYO KK; others: 01), 26. Dezember 1983 (1983-12-26)

## Beschreibung

Die vorliegende Erfindung betrifft allgemein Betriebsverfahren für Längsteilanlagen und Längsteilanlagen.

Die bisher in der Praxis bekannt gewordenen Verfahren zur Einstellung der Schneidluft und der Eintauchtiefe bei Kreismesserscheren in Längsteilanlagen sind:

### Einstellung der Schneidluft:

Die Schneidluft wird in Abhängigkeit von der Banddicke vor Schneidbeginn durch feste Distanzringe beim Rüstvorgang an der Kreismesserschere eingestellt.

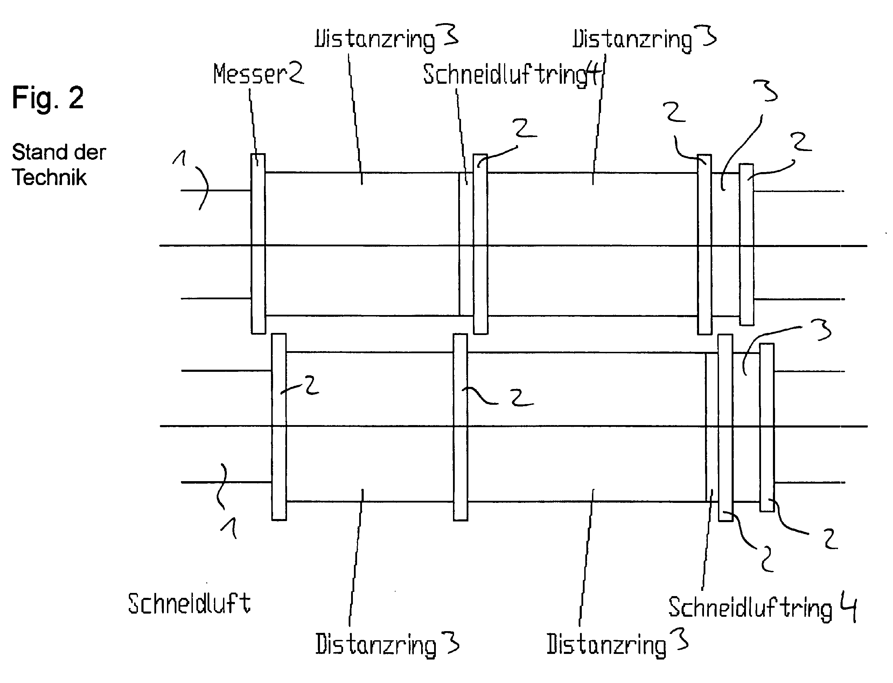

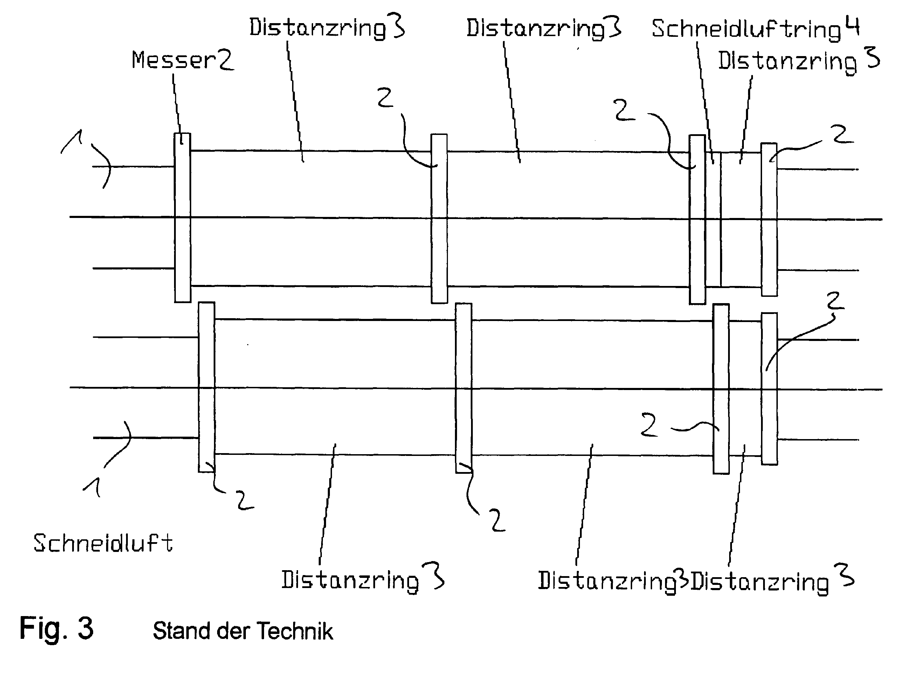

Dabei gibt es zwei Varianten:
- a): für jeden Bandstreifen wird durch Schneidluftringe die Schneidluft eingestellt (siehe Fig. 2). Der Schneidgrad ist an beiden Schneidkanten immer auf der gleichen Seite des Bandstreifens.
- b): die Schneidluft für alle Bandstreifen wird durch einen Schneidluftring eingestellt (siehe Fig. 3). Der Schneidgrad befindet sich bei jedem Bandstreifen an einer Schneidkante oben und an der anderen Schneidkante unten.

Die optimale Schneidluft liegt bei beiden Varianten je nach Material und Materialeigenschaften zwischen 5 und 10% der Banddicke. Die Schneidluft kann während des Schneidvorgangs nicht verändert werden.

### Einstellung der Schnitttiefe:

Die Schnitttiefe wird nach Vorgabe durch den Bediener oder während der Arbeitsvorbereitung elektromotorisch, hydraulisch oder manuell eingestellt. Die Schnitttiefe wird bei elektromotorischer oder hydraulischer Anstellung teilweise durch eine Regelung konstant gehalten. Die optimale Schnitttiefe ist abhängig von der Banddicke und den Materialeigenschaften. Ein optimales Schnittbild wird erreicht wenn das Schnittbild 1/3 Schnitt und 2/3 Bruch aufweist.

Bei Bändern mit ungleicher Banddicke kann bisher die Schneidluft nicht und die Schnitttiefe nur im beschränken Maße an die wechselnden Banddicken angepasst werden.

Das Längsteilen von Band erfolgt mittels paarweise zusammenwirkender Kreismesser. Die optimale Eintauchtiefe der Kreismesser in das Band ist abhängig vom zu schneidenden Band. Typischerweise kommen mehrere Kreismesserpaare gleichen Durchmessers auf je einer oberen und einer unteren Messerwelle zum Einsatz. Die gemeinsame Eintauchtiefe aller Kreismesser wird durch die Variation des Messerwellenabstandes eingestellt.

Stand der Technik ist es, vor dem Beginn des Schneidprozesses die Einbaustücke in denen die Messerwellen gelagert sind auf einen definierten Abstand zu fahren. Dieser Abstand der Einbaustücke wird kontinuierlich gemessen und durch Regelung der Werkzeuganstellung während des Schneidprozesses konstant gehalten. Dadurch wird das Auffedern der Einbaustücke ausgeglichen. Das Auffedern der Einbaustücke stellt jedoch nur einen Teil der Positionsveränderung der Kreismesser dar.

US-B1-6 314 388 beschreibt ein Betriebsverfahren für Längsteilanlagen, wobei Schneidluft und Eintauchtiefe bei Kreismesserscheren in Längsteilanlagen für Bänder optimierend eingestellt werden.

WO 96/03245 A offenbart ein Betriebsverfahren für Längsteilanlagen, wobei Schnittparameter bei Kreismesserscheren in Längsteilanlagen für Bänder während des laufendes Betriebs eingestellt werden.

Die Erfindung hat und erreicht das Ziel, Betriebsverfahren für Längsteilanlagen zur Bearbeitung von Bändern mit ungleicher Banddicke weiter zu optimieren.

Dazu schafft die Erfindung ein Betriebsverfahren für Längsteilanlagen mit den Merkmalen des Anspruchs 1.

Mit dem erfindungsgemäßen Verfahren erfolgt somit eine optimale Einstellung von Schneidluft und/oder Eintauchtiefe bei Kreismesserscheren in Längsteilanlagen für Bänder mit ungleicher Banddicke über die Bandlänge. Besonders bevorzugt werden Schneidluft und Eintauchtiefe während des laufenden Betriebs der Längsteilanlage optimierend eingestellt.

Nachfolgend sind bevorzugte und vorteilhafte Ausgestaltungen angegeben.

### 1. Einstellung der Schneidluft:

Die Schneidluft kann in Abhängigkeit der wechselnden Banddicke durch Verschieben einer Messerwelle immer auf einen optimalen Wert eingestellt werden. Insbesondere kann dies unter Berücksichtigung der Kriterien und Merkmale der oben im Zusammenhang mit dem Stand der Technik unter b) beschrieben Variante erfolgen.

Das Verschieben kann elektromotorisch, hydraulisch oder durch Piezoelemente erfolgen.

Der Istwert der Verschiebung kann direkt an einem Messer oder indirekt an einer Messerwelle oder einem Stellglied gemessen werden.

Ein Verschieben der Messerwelle ohne Istwertermittlung ist im Rahmen der vorliegenden Erfindung ebenfalls beinhaltet und möglich.

Die Einstellung der Schnitt- oder Schneidluft wird bevorzugt und mit Vorteil entsprechend der gemessenen Banddicke und der Bandgeschwindigkeit insbesondere ausgehend von einem Grundwert immer auf den optimalen Wert gefahren.

### 2. Einstellung der Schnitttiefe

Die Schnitttiefe kann in Abhängigkeit der wechselnden Banddicke durch Zusammen- oder Auseinanderfahren einer oder beider Messerwellen immer auf einen optimalen Wert eingestellt werden.

Die Anstellung kann elektromotorisch, hydraulisch oder durch Piezoelemente erfolgen.

Der Istwert der Anstellung kann direkt am Messer oder indirekt an Messenwellen, Einbaustücken oder Stellgliedern gemessen werden.

Eine Anstellung der Messerwellen ohne Istwertermittlung ist im Rahmen der vorliegenden Erfindung ebenfalls beinhaltet und möglich.

Die Einstellung der Schnitttiefe wird vorzugsweise und vorteilhafterweise entsprechend der gemessenen Banddicke und der Bandgeschwindigkeit immer auf den optimalen Wert gefahren.

Vorzugsweise wird das Auffedern der Elemente ausgeglichen, welche nicht von der Abstandsregelung der Einbaustücke erfasst werden.

Die Nachgiebigkeit dieser Elemente kann auf verschiedene Weisen ermittelt und anschließend durch die Werkzeuganstellung ausgeglichen werden. Die Ermittlung der Nachgiebigkeit dieser Elemente ist, wie im Rahmen der vorliegenden Erfindung erkannt wurde, besonders bedeutungsvoll und daher bei einem bevorzugten Regelungskonzept berücksichtigt, das insbesondere für die genaue Einhaltung der Eintauchtiefe der Kreismesser unter wechselnden Schnittbedingungen sorgt.

Die Erfassung von Durchbiegung der Messerwelle und Deformation der Wälzlager kann auf verschiede Weisen erfolgen. Sie kann direkt durch Messung der Verlagerung der Messerposition an mindestens zwei Stellen oder indirekt durch Ermittlung der Summenschnittkraft erfolgen. Aus der Summenschnittkraft kann die Positionsveränderung der Kreismesser auf theoretische oder empirische Weise ermittelt werden. Der daraus abgeleitete Zusammenhang zwischen Positionsverlagerung der Kreismesser und der Eintauchtiefe wird vorzugsweise in einer Datenbank der Maschinensteuerung hinterlegt, so dass daraus kontinuierlich die neue Sollwertvorgabe der Werkzeuganstellung berechnet werden kann.

Auf die folgenden indirekten Arten, welche alternativer Bestandteil des neuen Regelungskonzeptes sind, kann auf die Summenschnittkraft geschlossen werden:
- 1.: Durch Messung der Dehnung der Werkzeuganstellvorrichtung, welche insbesondere als Kugelrollspindel ausgeführt sein kann.
- 2.: Durch in die Werkzeuganstellung integrierte Kraftmessvorrichtungen.
- 3.: Durch in die Messerwelle oder die Werkzeuge integrierte Dehnungsmessvorrichtungen.
- 4.: Durch mindestens zwei Distanzringe, welche lokale axiale Kraftmessvorrichtungen aufweisen.

Aus der Summenschnittkraft können Rückschlüsse auf den Verschleiß des Messersatzes und damit die zu erwartende Schnittqualität gezogen werden. Dadurch wird in weiter vorteilhafter Weise eine laufende Qualitätskontrolle von Schneidwerkzeug und Produkt mit geringstem Aufwand ermöglicht.

Weitere bevorzugte und/oder vorteilhafte Ausgestaltungen der Erfindung ergeben sich aus den gesamten vorliegenden Anmeldungsunterlagen.

Die Erfindung wird anhand eines Ausführungsbeispiels nachfolgend unter Bezugnahme auf die Zeichnung lediglich exemplarisch näher erläutert, in der
- Fig. 1: eine schematische Skizze eines Ausführungsbeispiels einer Längsteilanlage zur Duchführung des erfindungsgemäßen Verfahrens ist,
- Fig. 2: eine schematische Skizze einer Längsteilanlage nach dem Stand der Technik ist, und
- Fig. 3: eine schematische Skizze einer Längsteilanlage nach dem Stand der Technik ist.

Anhand der nachfolgend beschriebenen und in den Zeichnungen dargestellten Ausführungs- und Anwendungsbeispiele wird die Erfindung lediglich exemplarisch näher erläutert, d.h. sie ist nicht auf diese Ausführungs- und Anwendungsbeispiele oder auf die Merkmalskombinationen innerhalb eines Ausführungs- und Anwendungsbeispiels beschränkt.

Gleiche Bezugszeichen in den einzelnen Figuren und Abbildungen der Zeichnung bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

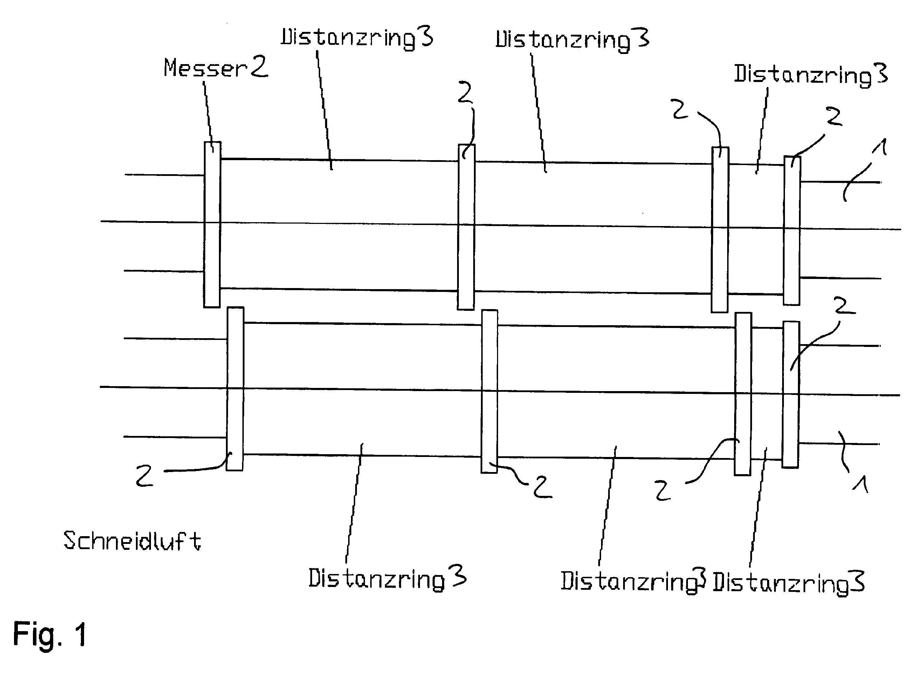

Anhand eines Ausführungsbeispiels einer Längsteilanlage, von der verfahrenswesentliche Komponenten in der Fig. 1 schematisch skizziert sind, wird nachfolgend ein entsprechendes Ausführungsbeispiels eines Betriebsverfahrens dieser Längsteilanlage zur optimalen Einstellung von Schneidluft und/oder Eintauchtiefe bei Kreismesserscheren in der Längsteilanlage für Bänder mit ungleicher Banddicke über die Bandlänge lediglich exemplarisch und nicht beschränkend erläutert. Bei diesem Ausführungsbeispiel eines Betriebsverfahrens dieser Längsteilanlage werden Schneidluft und Eintauchtiefe während des laufenden Betriebs der Längsteilanlage optimierend eingestellt.

### 1. Einstellung der Schneidluft:

Die Schneidluft wird in Abhängigkeit der wechselnden Banddicke durch Verschieben einer Messerwelle 1, an der Messer 2 und Distanzringe 3 angeordnet sind, immer auf einen optimalen Wert eingestellt. Dies erfolgt vorzugsweise nach der oben im Zusammenhang mit dem Stand der Technik unter b) beschrieben Variante, d.h. die Schneidluft für alle Bandstreifen wird durch einen Schneidluftring 4 eingestellt (vergleiche auch Fig. 3). Der Schneidgrad befindet sich bei jedem Bandstreifen an einer Schneidkante oben und an der anderen Schneidkante unten..

Das Verschieben erfolgt elektromotorisch, hydraulisch oder durch Piezoelemente. Der Istwert der Verschiebung wird direkt an einem Messer 2 oder indirekt an der Messerwelle 1 oder einem Stellglied gemessen. Ein Verschieben der Messerwelle 1 ohne Istwertermittlung ist auch denkbar.

Die Banddicke wird in einem festen Abstand vor dem Schnitt kontinuierlich gemessen. Die Einstellung der Schnittluft wird entsprechend der gemessenen Banddicke und der Bandgeschwindigkeit (Grundwert) immer auf den optimalen Wert gefahren. Anstelle der Banddicke kann auch das Bandprofil in Abhängigkeit von der Bandlänge vorgegeben werden.

### 2. Einstellung der Schnitttiefe

Die Schnitttiefe wird in Abhängigkeit der wechselnden Banddicke durch zusammen- oder auseinanderfahren einer oder beider Messerwellen 1 immer auf einen optimalen Wert eingestellt. Die Anstellung erfolgt elektromotorisch, hydraulisch oder durch Piezoelemente. Der Istwert der Anstellung wird direkt an Messer 2 oder indirekt an den Messenwellen 1, Einbaustücken oder Stellgliedern gemessen.

Eine Anstellung der Messerwellen 1 ohne Istwertermittlung ist auch denkbar. Die Banddicke wird in einem festen Abstand vor dem Schnitt kontinuierlich gemessen. Die Einstellung der Schnitttiefe wird entsprechend der gemessenen Banddicke und der Bandgeschwindigkeit immer auf den optimalen Wert gefahren. Anstelle der Banddicke kann auch das Bandprofil in Abhängigkeit von der Bandlänge vorgegeben werden.

Nachfolgend wird noch ein Ausführungsbeispiel eines bevorzugten Regelungskonzeptes näher beschrieben ,um insbesondere das Auffedern der Elemente auszugleichen, welche nicht von der Abstandsregelung der Einbaustücke erfasst werden.

Die Nachgiebigkeit dieser Elemente kann auf verschiedene Weisen ermittelt und anschließend durch die Werkzeuganstellung ausgeglichen werden. Die Ermittlung der Nachgiebigkeit dieser Elemente ist bei dem Ausführungsbeispiel von grundlegender Bedeutung für das bevorzugten Regelungskonzept und somit für die genaue Einhaltung der Eintauchtiefe der Kreismesser unter wechselnden Schnittbedingungen.

Die Erfassung von Durchbiegung der Messerwelle und Deformation der Wälzlager kann auf verschiede Weisen erfolgen. Sie kann direkt durch Messung der Verlagerung der Messerposition an mindestens zwei Stellen oder indirekt durch Ermittlung der Summenschnittkraft erfolgen. Aus der Summenschnittkraft kann die Positionsveränderung der Kreismesser auf theoretische oder empirische Weise ermittelt werden. Der daraus abgeleitete Zusammenhang zwischen Positionsverlagerung der Kreismesser und der Eintauchtiefe wird in der Datenbank der Maschinensteuerung hinterlegt, so dass daraus kontinuierlich die neue Sollwertvorgabe der Werkzeuganstellung berechnet werden kann.

Auf die folgenden indirekten Arten, welche alternativer Bestandteil des bevorzugten Regelungskonzeptes sind, kann auf die Summenschnittkraft geschlossen werden:
- 1.: Durch Messung der Dehnung der Werkzeuganstellvorrichtung, welche insbesondere als Kugelrollspindel ausgeführt sein kann.
- 2.: Durch in die Werkzeuganstellung integrierte Kraftmessvorrichtungen.
- 3.: Durch in die Messerwelle oder die Werkzeuge integrierte Dehnungsmessvorrichtungen.
- 4.: Durch mindestens zwei Distanzringe, welche lokale axiale Kraftmessvorrichtungen aufweisen.

Aus der Summenschnittkraft können Rückschlüsse auf den Verschleiß des Messersatzes und damit die zu erwartende Schnittqualität gezogen werden. Dadurch wird eine laufende Qualitätskontrolle von Schneidwerkzeug und Produkt mit geringstem Aufwand ermöglicht.

## Patentansprüche

1. Betriebsverfahren für Längsteilanlagen, wobei Schneidluft und/oder Eintauchtiefe bei Kreismesserscheren in Längsteilanlagen für Bänder mit ungleicher Banddicke über die Bandlänge während des laufendes Betriebs optimierend eingestellt werden, wobei die Banddicke in einem festen Abstand vor dem Schnitt kontinuierlich gemessen wird oder anstelle der Banddicke das Bandprofil in Abhängigkeit von der Bandlänge vorgegeben wird.

2. Betriebsverfahren für Längsteilanlagen nach Anspruch 1,
wobei die Schneidluft in Abhängigkeit der wechselnden Banddicke durch Verschieben einer Messerwelle immer auf einen optimalen Wert eingestellt wird,

3. Betriebsverfahren für Längsteilanlagen nach Anspruch 2,
wobei die Schneidluft für alle Bandstreifen durch einen Schneidluftring eingestellt wird, und/oder
wobei das Verschieben elektromotorisch, hydraulisch oder durch Piezoelemente erfolgt, und/oder
wobei der Istwert der Verschiebung direkt an einem Messer oder indirekt an einer Messerwelle oder einem Stellglied gemessen wird, und/oder
wobei ein Verschieben der Messerwelle ohne Istwertermittlung erfolgt.

4. Betriebsverfahren für Längsteilanlagen nach einem der vorhergehenden Ansprüche,
wobei insbesondere die Einstellung der Schnitt- oder Schneidluft entsprechend der gemessenen Banddicke und der Bandgeschwindigkeit bevorzugt ausgehend von einem Grundwert immer auf den optimalen Wert gefahren wird.

5. Betriebsverfahren für Längsteilanlagen nach einem der vorhergehenden Ansprüche,
wobei die Schnitttiefe in Abhängigkeit der wechselnden Banddicke durch Zusammen- oder Auseinanderfahren einer oder beider Messerwellen immer auf einen optimalen Wert eingestellt wird.

6. Betriebsverfahren für Längsteilanlagen nach Anspruch 2,
wobei die Anstellung elektromotorisch, hydraulisch oder durch Piezoelemente erfolgt, und/oder
wobei der Istwert der Anstellung direkt am Messer oder indirekt an Messenwellen, Einbaustücken oder Stellgliedern gemessen wird, und/oder
wobei eine Anstellung der Messerwellen ohne Istwertermittlung erfolgt.

7. Betriebsverfahren für Längsteilanlagen nach einem der vorhergehenden Ansprüche,
wobei die Einstellung der Schnitttiefe entsprechend der gemessenen Banddicke und der Bandgeschwindigkeit immer auf den optimalen Wert gefahren wird.

## Claims

1. Operating method for slitters, wherein cutting air and/or immersion depth in circular knife shearing machines in slitters for strips having an unequal strip thickness over the strip length are adjusted in an optimising manner during on-going operation,
wherein the strip thickness is continuously measured at a fixed interval prior to cutting or instead of the strip thickness the strip profile is specified in dependence upon the strip length.

2. Operating method for slitters as claimed in claim 1, wherein the cutting air is always adjusted to an optimum value in dependence upon the changing strip thickness by the displacement of a knife shaft.

3. Operating method for slitters as claimed in claim 2, wherein the cutting air for all strips is adjusted by means of a cutting air ring, and/or
wherein the displacement is performed by electric motor, hydraulically or by piezoelectric elements, and/or
wherein the actual value of the displacement is measured directly on a knife or indirectly on a knife shaft or an actuating element, and/or
wherein the knife shaft is displaced without any determination of the actual value.

4. Operating method for slitters as claimed in any one of the preceding claims,
wherein in particular the adjustment of the cut air or cutting air is always driven preferably starting from a basic value to the optimum value according to the measured strip thickness and the strip speed.

5. Operating method for slitters as claimed in any one of the preceding claims,
wherein the cut depth is always adjusted to an optimum value in dependence upon the changing strip thickness by driving one or both knife shafts together or apart from one another.

6. Operating method for slitters as claimed in claim 2, wherein the adjustment is performed by electric motor, hydraulically or by piezoelectric elements, and/or
wherein the actual value of the adjustment is measured directly on the knife or indirectly on knife shafts, mounting pieces or actuating elements, and/or
wherein the knife shafts are adjusted without determination of the actual value.

7. Operating method for slitters as claimed in any one of the preceding claims,
wherein the adjustment of the cut depth is always driven to the optimum value according to the measured strip thickness and the strip speed.

## Revendications

1. Procédé de fonctionnement pour des installations de refendage, dans lequel l'air de coupe et/ou la profondeur de plongée, dans le cas de cisailles à couteau circulaire dans des installations de refendage en longueur pour des bandes présentant une épaisseur inégale sur la longueur de la bande, sont réglés de manière optimisée pendant le fonctionnement, l'épaisseur de bande étant mesurée à une distance fixe en avant de la coupe et en continu, ou bien le profil de bande est imposé, à la place de l'épaisseur de bande, en fonction de la longueur de la bande.

2. Procédé de fonctionnement pour des installations de refendage selon la revendication 1,
dans lequel l'air de coupe est réglé toujours à une valeur optimale en fonction de l'épaisseur de bande changeante par déplacement d'un arbre à couteau.

3. Procédé de fonctionnement pour des installations de refendage selon la revendication 2, dans lequel l'air de coupe est réglé pour tous les rubans de la bande par une bague d'air de coupe, et/ou
dans lequel le déplacement a lieu par moteur électrique, par voie hydraulique ou par des éléments piézo-électriques, et/ou
dans lequel la valeur réelle du déplacement est mesurée directement au niveau d'un couteau ou indirectement au niveau d'un arbre à couteau ou d'un organe de positionnement, et/ou
dans lequel un déplacement des arbres à couteau est effectué sans détermination de valeur réelle.

4. Procédé de fonctionnement pour des installations de refendage selon l'une des revendications précédentes,
dans lequel en particulier le réglage de l'air de coupe est effectué en correspondance de l'épaisseur mesurée de la bande ou de la vitesse de la bande, de préférence en partant d'une valeur de base, toujours à la valeur optimale.

5. Procédé de fonctionnement pour des installations de refendage selon l'une des revendications précédentes,
dans lequel la profondeur de coupe est réglée toujours à une valeur optimale en fonction de l'épaisseur de bande changeante par rapprochement ou éloignement de l'un des arbres à couteau ou des deux.

6. Procédé de fonctionnement pour des installations de refendage selon la revendication 2, dans lequel l'approche a lieu par moteur électrique, par voie hydraulique ou par des éléments piézo-électriques, et/ou
dans lequel la valeur réelle de l'approche est mesurée directement au niveau du couteau ou indirectement au niveau des arbres à couteau, des pièces de montage ou des organes de positionnement, et/ou
une approche des arbres à couteau a lieu sans détermination de valeur réelle.

7. Procédé de fonctionnement pour des installations de refendage selon l'une des revendications précédentes,
dans lequel le réglage de la profondeur de coupe est effectué toujours à la valeur optimale en correspondance de l'épaisseur mesurée de la bande ou de la vitesse de la bande.
